# EUROPEAN PATENT APPLICATION

(11) **EP 4 733 189 A1**
(43) Date of publication of application: **29.04.2026**
(21) Application number: 25197154.5
(22) Date of filing: 20.08.2025
(51) Int. Cl.: B64C 23/06, B60R 16/02, H01B 7/18

(54) **A WING ASSEMBLY COMPRISING A WIRING HARNESS**

(30) Priority: 22.10.2024 GB 202415551; 22.10.2024 GB 202415550
(71) Applicant: Airbus Operations Limited, Bristol BS34 7PA (GB)
(72) Inventor: CLOUGH, James, Bristol, BS34 7PA (GB); RUIZ DE PABLO, Javier, Bristol, BS34 7PA (GB)
(74) Representative: Abel & Imray LLP

(57) **Abstract**

A wing assembly for an aircraft 1, the wing assembly comprising: a fixed wing 5 and a wing tip device 11 moveably mounted at the end of the fixed wing 5. A wiring harness 15 extends between the fixed wing 5 and the wing tip device 11, a length of the wiring harness 15 being encased in a length of protective sleeve 25. The protective sleeve 25 is pre-shaped, for example pre-moulded, to follow a path along a helical curve 31.

## Description

### BACKGROUND OF THE INVENTION

The present disclosure relates to an aircraft comprising a fixed wing and a moveable wing tip device, with a wiring harness extending from the fixed wing into the wing tip device. The present disclosure also concerns a wing assembly, a protective sleeve for a wiring harness and a method of mitigating wear on a wiring harness.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Therefore, movable wing tip devices have been introduced into passenger aircraft, where a wing tip device is movable between a flight configuration for use during flight, and a ground configuration for use during ground-based operations. In the flight configuration, the wing tip device forms an extension of the wing and contributes to the lift generated by the wing. In the ground configuration, the wing tip device is moved away from the flight configuration such that the span of the aircraft wing is reduced, thereby allowing use of existing gates and taxiways. Such an arrangement is sometimes referred to as a 'folding wing tip'. It will be appreciated that such a term encompasses a range of sizes, and where the hinge is relatively far inboard this may equally be considered a 'folding wing' or 'movable wing'.

It is desirable to transfer power and/or data into a folding wing tip. In most parts of an aircraft, power and data can be readily provided via suitable electrical wiring. This is typically provided in a wiring harness (also referred to as a cable harness, or wiring loom). However, in the context of a folding wing tip there are several challenges. Firstly, the wiring harness must extend across a joint and therefore be arranged to cope with repeated exposure to potentially harsh environmental conditions, with movement, and/or with changes in tensional loads. Secondly, there tends to be relatively little available volume within the aircraft structure towards the tip of the wing. The ability to incorporate a degree of slack in the wiring harness may therefore be restricted.

It has also been recognised that the movement of a folding wing tip can also cause a related movement (for example flex) of the wiring harness. This movement, if not properly managed, may have the ability to cause wear to the wiring harness and/or to the surrounding components and structure of the wing assembly.

Aspects of the present disclosure seek to mitigate one or more of the above-mentioned challenges. Alternatively or additionally, aspects of the present disclosure seek to provide an improved aircraft wing assembly.

### SUMMARY OF THE INVENTION

According to a first aspect of the disclosure, there is provided a wing assembly for an aircraft, the wing assembly comprising: a fixed wing; a wing tip device moveably mounted at a joint at the end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced; and a wiring harness extending between the fixed wing and the wing tip device, the wiring harness comprising a plurality of conductors and being arranged to transmit electrical power and/or data to the wing tip device, and a length of the wiring harness being encased in a length of protective sleeve. The protective sleeve is pre-shaped to follow a path along a helical curve.

Pre-shaping the protective sleeve to follow a path along a helical curve has been found to be especially beneficial. For example, by pre-shaping (for example preforming) a length of the sleeve into this shape, the degree of flex of the wiring harness, during movement of the wing tip device between the flight and ground configurations, may be reduced and/or able to be better managed. In contrast, it may be problematic if an initially-linear length of sleeve is bent into a helical path, because internal stresses may be present, and the resulting wiring harness flex behaviour may be sub-optimal.

The protective sleeve is pre-shaped to follow a path along a helical curve. In some embodiments, there may be other parts of the sleeve that do not necessarily follow this curve. For example, the protective sleeve may further comprise a first sleeve length and a second sleeve length, the first and second sleeve lengths may follow a path (for example a non-helical path, such as a generally linear path) extending either side of the helical curve.

The helical curve of the protective sleeve may be pre-shaped during manufacture of the sleeve. The pre-shaping of the sleeve may comprise, or consist of, pre-moulding the sleeve. Thus, in preferred embodiments of the invention, the protective sleeve is pre-moulded to follow the path along the helical curve.

The protective sleeve is preferably pre-shaped such that prior to the sleeve being installed in the wing assembly, and under no external forces, the sleeve follows the path along the helical curve. For example, the sleeve may be arranged to elastically deform under an external load, but is arranged to return to an equilibrium state upon removal of the external load, wherein in the equilibrium state the protective sleeve follows the path along the helical curve.

The helical curve may extend around and along a helix axis. The helix axis may be parallel to, and in some embodiments co-axial with, the axis of rotation of the joint. It will be appreciated that the helical curve shape is the shape formed by the sleeve (for example the centre-line of the sleeve), as it extends along its length (i.e. as it extends along the length of the wiring harness).

The assembly may further comprise a harness guide located between the fixed wing and the wing tip device, to guide the wiring harness between the fixed wing and the wing tip device. The harness guide may comprise a helical channel. The corresponding helical curve of the protective sleeve is preferably received in the helical channel. The helical curve of the protective sleeve preferably substantially matches the corresponding curve of the helical channel. The provision of such a harness guide has been found to be especially beneficial in arrangements in which the protective sleeve comprises a preformed helical curve. For example, having a pre-shaped helical curve may allow the sleeve to be installed into the harness guide without the need to force the sleeve into the desired shape (which may otherwise have introduced stresses into the sleeve and/or the wiring harness).

The outer surface of the protective sleeve may be shaped such that the sleeve is urged to self-centre in the helical channel of the harness guide. Such an arrangement has been found to be beneficial because it may reduce the likelihood of clashes and/or wear between the sleeve and the guide. This is especially the case at the entry and exit to/from the guide. In some embodiments, the outer surface of the sleeve, along at least some of the length of the helical curve, may be shaped such that the sleeve is urged to self-centre in the helical channel of the harness guide. For example, the sleeve may comprise a chamfered surface configured to slide, preferably radially, within the helical channel.

The wing assembly may be configured such that during movement of the wing tip device between the flight and the ground configuration, there is relative movement between a region of the protective sleeve and a region of the helical channel. The protective sleeve may comprise a reinforced portion located in said region. The reinforced region may be reinforced relative to an adjacent length of the sleeve. For example, the sleeve may be locally thickened. The sleeve may comprise reinforcement material.

The protective sleeve may comprise a first end inboard of the joint, and a second end outboard of the joint. The wing assembly may further comprise: a first attachment point, located along the wiring harness between the first end and the joint, the first attachment point being arranged to hold the protective sleeve in position, at the attachment point, relative to the fixed wing. The wing assembly may further comprise: a second attachment point, located along the wiring harness between the joint and the second end, the second attachment point being arranged to hold the protective sleeve in position, at the attachment point, relative to the wing tip device. It has been recognised that holding parts of the sleeve in position, plays an important role in how the sleeve behaves during movement of the wing tip device between the flight and the ground configurations. This has been found to be especially relevant in arrangements in which the sleeve comprises a helical curve.

The locations of the first and second attachment points are preferably pre-determined prior to installation of the protective sleeve into the wing assembly. Such an arrangement may allow the sleeve to be fixed at the optimum position(s) (along the sleeve), to manage the flex of the wiring harness (rather than those locations being determined, post-installation, by what may be most convenient at that time).

The first and second attachment points may comprise fastening locators, for attaching the sleeve to an aircraft structure. The fastening locators may comprise, for example, P-clips. In some embodiments the attachment points may form part of the protective sleeve. In some embodiments the attachment points may be integrated into the protective sleeve In some embodiments, the first and second attachment points may be located along the wiring harness and subsequently encased by the protective sleeve.

The first end of the protective sleeve may be proximal the fixed wing. The second end of the sleeve may be proximal the wing tip device. The protective sleeve may extend over a length of the wiring harness spanning the joint. The wing assembly may be arranged such that the length of the sleeve between the first end and the second end is exposed to the external environment when the wing tip device is in the ground configuration.

The sleeve is preferably an electrical insulator. The wiring harness may comprise a high voltage conductor, arranged to transmit a high voltage supply. The high voltage supply may be at least 240V DC. The high voltage supply may be up to 270V DC. The high voltage supply may be up to 300V DC. The high voltage supply may be 270V DC. Aspects of the disclosure may be especially beneficial when a wiring harness is used for a high voltage supply because the presence of the high voltage creates specific safety requirements.

Each of the plurality of conductors in the wiring harness is preferably a sheathed conductor. Each of the conductors may take a number of forms depending on its use. The conductor may be a wire, but is more preferably a cable. For example, the conductor may be a single core cable, or a multi-core cable. The first and/or second wiring harnesses may each comprise a multiplicity of conductors.

The protective sleeve may be formed from a single piece of material. For example, the protective sleeve may be moulded around the circumference of the wiring harness. The sleeve may substantially enclose the wiring harness. It will be appreciated that the term 'sleeve' does not imply that the wiring harness has necessarily been fed through the sleeve. Indeed, the term 'sleeve' encompasses an arrangement in which the sleeve material has been moulded around the wiring harness *in situ,* to encase it.

According to another aspect of the invention, there is provided a wing assembly according to wing assembly for an aircraft, the wing assembly comprising: a fixed wing; a wing tip device moveably mounted at a joint at the end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced; and a wiring harness extending between the fixed wing and the wing tip device. The wiring harness is encased in a moulded casing, the casing comprising a length that has been pre-moulded into a helical-shape.

According to another aspect of the invention, there is provided an aircraft comprising the wing assembly of the first aspect or the second aspect.

According to another aspect of the invention, there is provided a wiring harness assembly comprising a wiring harness encased in a length of protective sleeve, wherein the protective sleeve is pre-moulded to follow a path along a helical curve. The protective sleeve of the wiring harness assembly may be for use as the sleeve in the other aspects of the invention disclosed herein.

According to yet another aspect of the invention, there is provided a method according to method of mitigating wear in a wiring harness assembly extending between a fixed wing and a moveable wing tip device, the wiring harness assembly comprising a wiring harness encased in a protective sleeve, wherein the method comprises the steps of: moulding a length of the protective sleeve into a helical curve shape; and installing the wiring harness assembly between the fixed wing and the wing tip device with the helical curve shape pre-moulded into the sleeve and the wiring harness encased in the sleeve.

The fixed wing may have an upper surface and a lower surface. The wing tip device may have an upper surface and a lower surface. In the flight configuration, the upper and lower surfaces of the wing tip device may be continuations of the upper and lower surfaces of the fixed wing. In the flight configuration, the trailing edge of the wing tip device may be a continuation of the trailing edge of the fixed wing. The leading edge of the wing tip device may be a continuation of the leading edge of the fixed wing. It may be that there is a smooth transition from the fixed wing to the wing tip device. It will be appreciated that there may be a smooth transition even when the shape of the wing is such that there are changes in sweep or twist at the junction between the fixed wing and wing tip device. It may be that there are no discontinuities at the junction between the fixed wing and wing tip device.

It may be that rotation of the wing tip device from the flight configuration to the ground configuration comprises upward rotation of the wing tip device relative to the fixed wing. In this way, the wing may comply with an airport compatibility gate limit, while also maintaining a reasonable ground clearance.

In the flight configuration, the span of the wing may exceed an airport compatibility limit. In the ground configuration the span is reduced such that the span (with the wing tip device in the ground configuration) is less than, or substantially equal to, the airport compatibility limit. The airport compatibility limit is preferably a span limit (for example relating to clearance restrictions for buildings, signs, other aircraft). The compatibility limit is preferably a gate limit. In the ground configuration, the wing tip device may be positioned such that the wing has its shortest span. In the ground configuration, the wing tip device may be oriented substantially vertical.

It may be that the wing tip device rotates in a first direction from the ground configuration to the flight configuration. It may be that the wing tip device rotates in a second direction, opposite to the first direction, from the flight configuration to the ground configuration.

The wing tip device may be a wing tip extension, for example a generally planar tip extension. In other embodiments, the wing tip device may comprise, or consist of, a non-planar device, such as a winglet. The wing tip device may comprise a further wing section having a further movable wing tip device at its distal end. The ordinarily skilled person will be aware of other devices suitable for movably placing at the wing tip. The wing tip device may include, for example, trailing edge moveable devices for control (ailerons) or leading edge devices for stall protection, such as slats or droop nose devices. It will be appreciated that the term 'wing tip device' does not limit the size of that structure. For example, the wing tip device may be a large wing extension, and may equally be considered a secondary, or outboard, wing. The length of the wing tip device may be more than 3m, preferably more than 4m, and more preferably more than 5m.

The span ratio of the fixed wing relative to the wing tip device may be such that the fixed wing comprises at least 60%, 70%, 80%, 90%, or more, of the overall span of the wing.

When the wing tip device is in the ground configuration, the aircraft may be unsuitable for flight. For example, the wing tip device may be aerodynamically and/or structurally unsuitable for flight in the ground configuration. The aircraft is preferably configured such that, during flight, the wing tip device is not moveable to the ground configuration. The aircraft may comprise a sensor for sensing when the aircraft is in flight. When the sensor senses that the aircraft is in flight, a control system is preferably arranged to disable the possibility of moving the wing tip device to the ground configuration. In the ground configuration the wing tip device may be held in place. For example, the wing tip device may be latched or locked in place to prevent movement back towards the flight configuration.

The aircraft may comprise an actuator for moving the wing tip device between the flight configuration and the ground configuration.

The wing tip device is moveably mounted at a joint at the end of the fixed wing. The joint may be a hinge joint. The joint may comprise a plurality of lugs. A hinge axis may pass through the plurality of lugs, the wing tip device being rotatable about said hinge axis, between the flight and ground configurations.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present disclosure may be incorporated into any and all other aspects of the present disclosure. Furthermore, the method of the disclosure may incorporate any of the features described with reference to the apparatus of the disclosure and *vice versa.*

### DESCRIPTION OF THE DRAWINGS

Embodiments of the present disclosure will now be described by way of example only with reference to the accompanying schematic drawings of which:
Figures 1A and 1B show a plan view and a frontal view respectively, of an aircraft according to a first embodiment of the invention;
Figure 2 shows a length of wiring harness encased within a protective sleeve, extending between the fixed wing and wing tip device in Figures 1A and 1B, when the wing tip device is in the flight configuration;
Figures 3A and 3B show layouts of the wiring harnesses and the sleeve, when the wing tip device is in the flight and the ground configuration respectively;
Figure 4A is a plan view of the sleeve extending around the harness guide, and
Figures 4B is a sectional view along line A-A of Figure 4A;
Figures 5A and 5B show a length of wiring harness encased within a protective sleeve in an arrangement according to a second embodiment of the invention; and
Figure 6 is a flow chart showing a method associated with the first embodiment of the invention.

### DETAILED DESCRIPTION

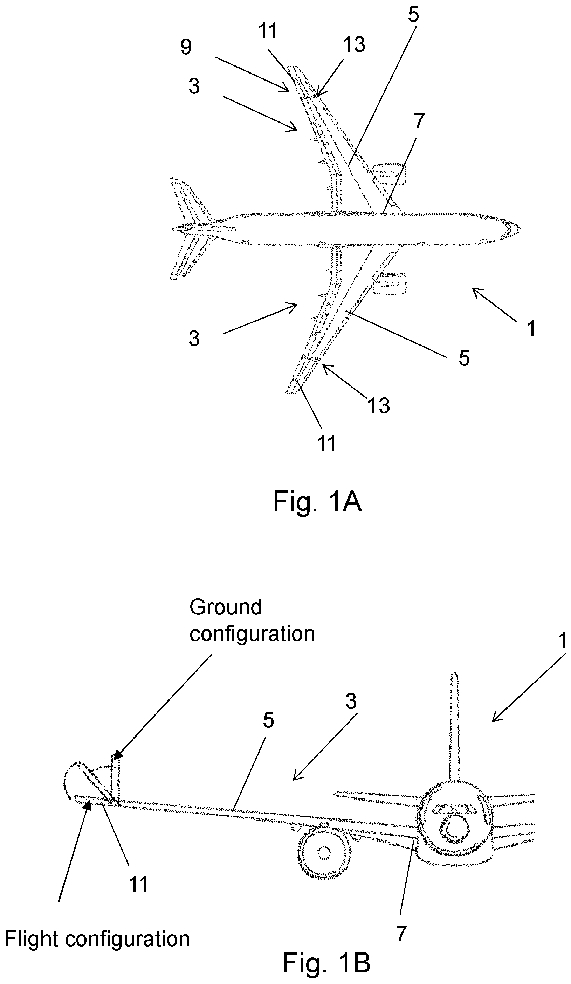

Referring first to Figures 1A and 1B, these figures show a plan view and a front view of an aircraft 1 according to a first embodiment. The aircraft 1 comprises two main wings 3 extending outwardly from the fuselage (one wing is not fully visible in Figure 1B). Each wing 3 comprises a fixed wing 5 extending from the root 7 to the tip 9. At the tip 9 of the fixed wing 5, the wing 3 also comprises a moveable wing tip device 11. In this embodiment, the wing tip device 11 comprises a planar wing tip extension. The wing tip device 11 is rotatably mounted on a hinge joint 13, having a hinge axis. As such, the wing tip device 11 is able to rotate about the hinge joint 13 relative to the fixed wing 5.

The aircraft 1 also comprises an actuator assembly (not shown) operable to rotate the wing tip device 11 about the hinge joint 13. Referring to Figure 1B, the wing tip device 11 is rotatable about the hinge joint 13 between a flight configuration, and a ground configuration. Figure 1B also shows the wing tip device 11 when moving partway between these two configurations.

In the flight configuration, the wing tip device 11 is an extension of the fixed wing 5. Accordingly, the upper and lower surfaces of the fixed wing 5 are continuous with the upper and lower surfaces of the wing tip device 11. The leading and trailing edges of the fixed wing 5 are also continuous with the respective leading and trailing edges of the wing tip device 11 (see Figure 1A). Such an arrangement is beneficial as it provides a relatively large wing span during flight, thereby providing an aerodynamically efficient aircraft.

The wing tip device 11 is rotatable, upwards, from the flight configuration to a ground configuration in which the wing tip device 11 is rotated, to a substantially upright position (shown in Figure 1B). The wing tip device 11 is moveable to this configuration when the aircraft 1 is on the ground. Once rotated to such a position, the span of the aircraft 1 is sufficient to meet airport compatibility gate limits. Thus, the aircraft 1 of the first embodiment can have a large span (exceeding gate limits) during flight, but is still able to comply with gate limits when on the ground.

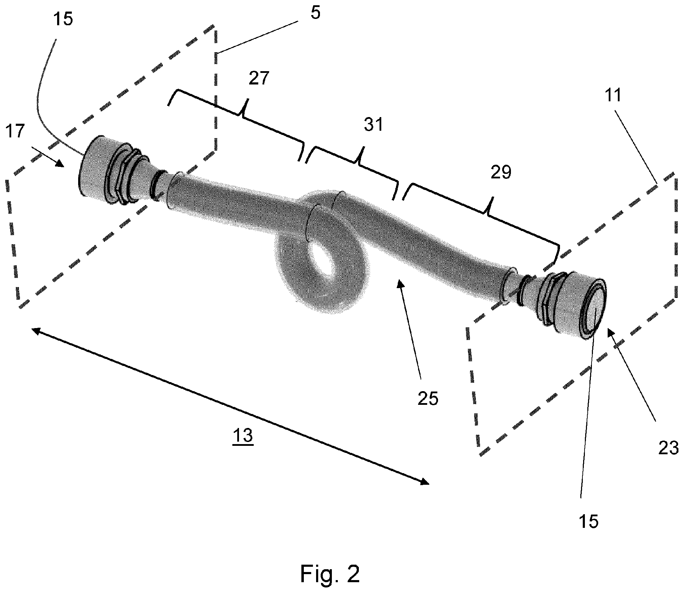

Aspects of the present disclosure relate to a wiring harness 15 and protective sleeve 25, extending across the joint 13, from the fixed wing 5 into the wing tip device 11. This will now be described in more detail with reference to Figure 2.

Figure 2 illustrates a protective sleeve 25 which encases a wiring harness 15 in the first embodiment of the invention. The wiring harness 15 is only visible schematically, in cross section, at the end of the sleeve 25 in Figure 2, but in practice the wiring harness 15 extends beyond the sleeve 25 from within the inside of the fixed wing 5, across the joint 13 (at which point the harness is encased within the sleeve 25), and out into the wing tip device 11. For clarity, the tip of the fixed wing 5 and the root of the wing tip device 11, are only shown schematically in phantom in Figure 2.

The wiring harness 15 emerges from the fixed wing 5 at a first end 17, and then crosses the hinge joint 13. The harness 15 enters the wing tip device 11 at a second end 23, and then continue into the wing tip device 11 where it connects to a variety of devices and sensors. The sleeve 25 is bounded at the first and second ends 17, 23 by couplings. The couplings are configured to connect the wiring harness 15 to the adjacent lengths of the wiring harness (not shown) in the fixed wing and the wing tip.

The wiring harness 15, as is known in wiring harnesses *per se* in the art, contains a multiplicity of sheathed electrical cables (not shown individually in the Figures). Each of the electrical cables performs a different function (for example, to supply electrical power to different devices in the aircraft, or to transmit data signals to/from sensors and devices in the aircraft). The cables are collected together in an assembly to form the harness, that is then routed in a suitable manner through the wing 3.

The protective sleeve 25 encases the wiring harness 15. The sleeve 25 follows a path as it extends along its length from the fixed wing 5 to the wing tip device 11. The path includes a helical curve 31 (described in more detail below), positioned between generally linear entry and exit lengths 27 and 29. The path of the sleeve is self-evident to the skilled person; in some circumstances it may be defined by the locus of the centreline of the sleeve.

During manufacture, the sleeve 25 is moulded to follow the helical curve over the length 31 (i.e. the sleeve is pre-moulded into this shape). As a result, the sleeve 25 naturally adopts the shape shown in Figure 2 when no external forces are applied. Pre-moulding the protective sleeve in this shape has been found to be especially beneficial. In particular, the flex of the wiring harness 15, during movement of the wing tip device 11 between the flight and ground configurations, may be reduced and/or able to be better managed. In contrast, it may be problematic if an initially-linear length of sleeve is bent it into a helical path, because internal stresses may be present, and the resulting wiring harness flex behaviour may be sub-optimal.

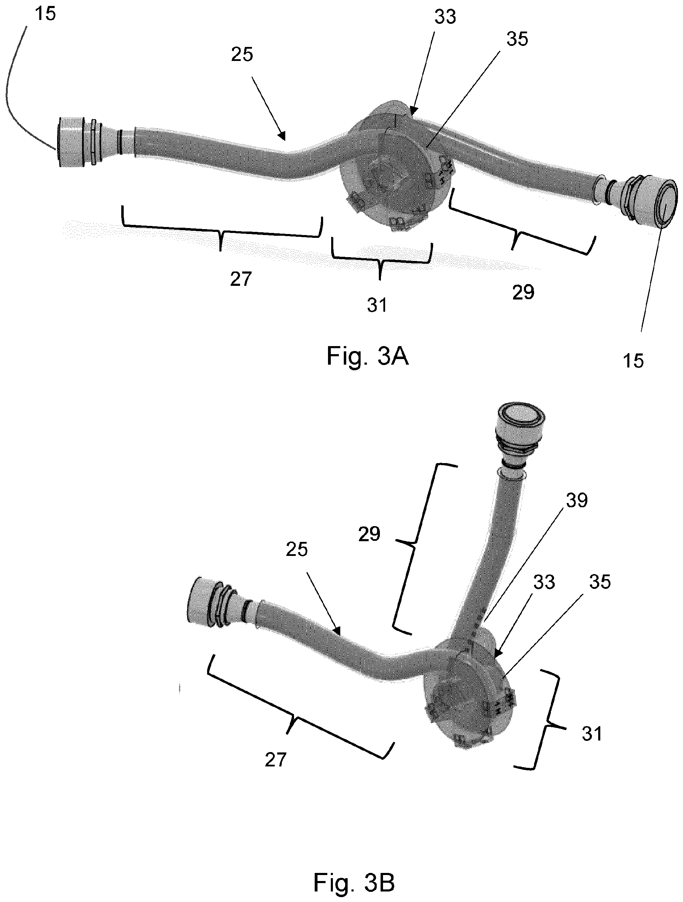

Figures 3A and 3B show the wiring harness 15 and the sleeve 25 of Figure 2, when the wing tip device is in the flight and the ground configuration respectively. These images also show a harness guide 33. The harness guide 33, comprises a helical channel 35 in which the corresponding helical curved length 31 of the protective sleeve 25 is received. In use, the protective sleeve 25 (encasing the wiring harness 15) is fed into the helical channel 35 such that the sleeve 25 wraps around the harness guide 33. When the wing tip device 11 moves relative to the fixed wing 5, the sleeve 25 wraps more or less around the harness guide 33, as can be seen when comparing the position of the sleeve in Figures 3A and 3B.

The use of the harness guide 33 may help to take up any slack in the wiring harness 15 across the hinge joint 13. This, in turn, may help to reduce the likelihood of the sleeve 25 getting stuck on, or rubbing against, other parts of the wing assembly.

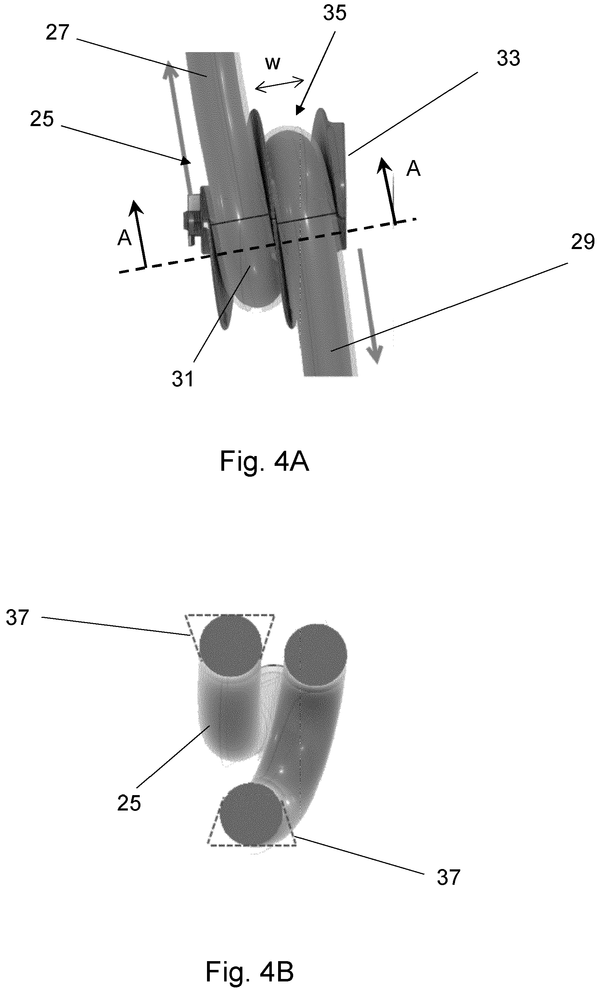

The position of the sleeve 25 within the width (w) of the helical channel 35 has been found to be an important factor in the level of wear encountered by the sleeve 25. Referring now to Figures 4A and 4B, Figure 4A is a plan view, and Figure 4B illustrates a cross-section A-A in Figure 4A, of the sleeve 25 as it passes through the helical guide 33. Figure 4B shows an optional variation of the first embodiment in which the outer surface of the sleeve 25 varies from its circular cross section, and instead included a flared, radially-outer edge 37. The flared edge 37 includes tapered sidewalls, which are arranged to self-centre with the corresponding walls of the channel 35. These flared edges 37 are shown in phantom in only Figure 4B to illustrate the deviation from the cross section of the sleeve of the first embodiment. In the variation illustrated in phantom in Figure 4B the flared radially-outer edges 37 extend along only a localised region, at which the sleeve enters and exits the helical channel 35.

Referring back to Figure 3B, it can be seen that, during movement of the wing tip device 11 to the ground configuration, there is relative movement between a region 39 of the protective sleeve 25 and a region of the helical channel 35 (highlighted by the dashed line along the sleeve 25 in Figure 3B). In the first embodiment of the invention, the protective sleeve 25 is locally reinforced along the length 39 at which relative movement takes place. The reinforcement is with additional material (not visible in these Figures) to mitigate wear on the sleeve 25.

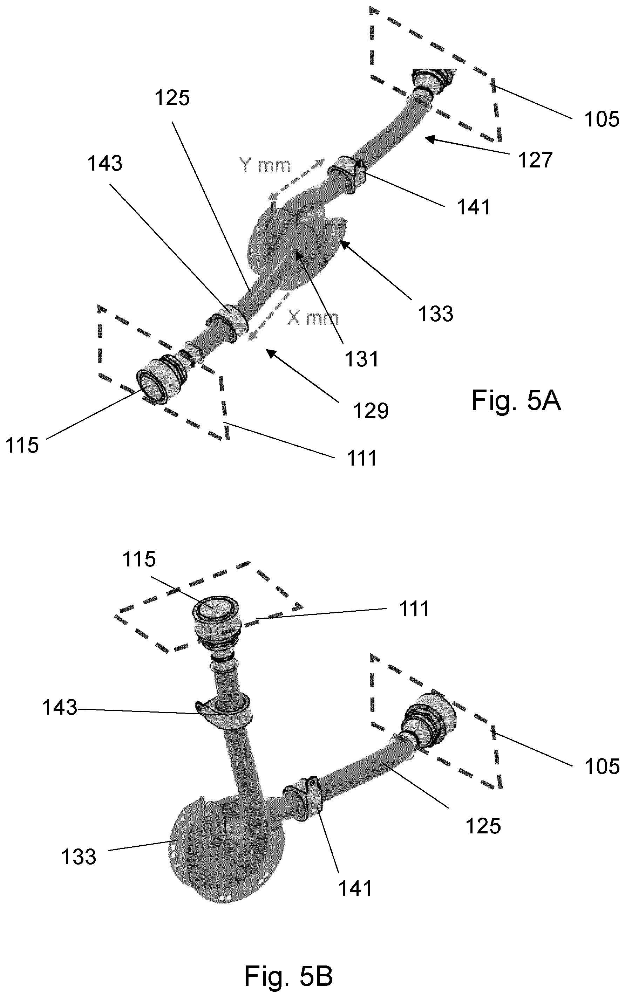

Figures 5A and 5B show a length of wiring harness 115 encased within a protective sleeve 125 in an arrangement according to a second embodiment of the invention. Like features that are common to the first embodiment are shown using the same reference numerals but incremented by 100. This arrangement in the second embodiment is substantially similar to the previous embodiment, except for the differences described below.

The wing assembly of the second embodiment comprises a first attachment point 141, in the form of a P-clip, located along the entry length 127 of the wiring harness 115. The wing assembly also comprises a second attachment point 143, in the form of another P-clip, located along the exit length 129 of the wiring harness 115.

Each of the attachment points 141, 143 are arranged to hold the protective sleeve 125 in position, at the attachment point, relative to the fixed wing 105 and wing tip device 111 respectively. It has been recognised that holding parts of the sleeve 125 in position, plays an important role in how the sleeve 125 behaves during movement of the wing tip device 111 between the flight and the ground configurations. This has been found to be especially relevant in arrangements in which the sleeve 125 comprises a helical curve 131. In the first embodiment of the invention, the location of the first and second attachment points 141, 143 (i.e. the distances marked X and Y mm in Figures 5A and 5B) are pre-determined, prior to installation of the protective sleeve 125 into the wing assembly. Such an arrangement allows the sleeve 125 to be fixed at the optimum positions, to manage the flex of the wiring harness 115. This is in contrast to those locations being determined, post-installation, by what may be most convenient at that time.

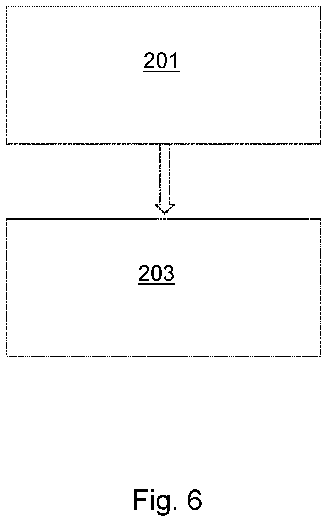

A method of mitigating wear in the wiring harness assembly of the first and second embodiments is illustrated in Figure 6. The method comprises a first step 201 of moulding the length of the protective sleeve 25,125 into the helical curve shape 31, 131. In this step, the wiring harness 15,115 is arranged into a helical curve and the sleeve is over-moulded to encase the wiring harness 15,115. The method then comprises the subsequent step 203 of installing the wiring harness assembly (comprising the wiring harness 15,115 and sleeve 25,125) between the fixed wing 5,105 and the wing tip device 11, 111 with the helical curve shape pre-moulded into the sleeve and the wiring harness encased in the sleeve.

Whilst the present invention has been described and illustrated with reference to particular embodiments, it will be appreciated by those of ordinary skill in the art that the invention lends itself to many different variations not specifically illustrated herein. For example, in an additional embodiment of the invention, the wing tip device is a larger, 5m, planar wing extension.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A wing assembly for an aircraft, the wing assembly comprising:
a fixed wing;
a wing tip device moveably mounted at a joint at the end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced; and
a wiring harness extending between the fixed wing and the wing tip device, the wiring harness comprising a plurality of conductors and being arranged to transmit electrical power and/or data to the wing tip device, and a length of the wiring harness being encased in a length of protective sleeve,
wherein the protective sleeve is pre-shaped to follow a path along a helical curve.

2. A wing assembly according to claim 1, wherein the protective sleeve is pre-moulded to follow the path along the helical curve.

3. A wing assembly according to claim 1 or claim 2, wherein the assembly further comprises a harness guide located between the fixed wing and the wing tip device, to guide the wiring harness between the fixed wing and the wing tip device,
and wherein the harness guide comprises a helical channel in which the corresponding helical curve of the protective sleeve is received.

4. A wing assembly according to claim 3, wherein outer surface of the protective sleeve is shaped such that the sleeve is urged to self-centre in the helical channel of the harness guide.

5. A wing assembly according to any of claims 3 or 4, wherein the assembly is configured such that during movement of the wing tip device between the flight and the ground configuration, there is relative movement between a region of the protective sleeve and a region of the helical channel, and wherein the protective sleeve comprises a reinforced portion located in said region.

6. A wing assembly according to any preceding claim, wherein the protective sleeve comprises a first end inboard of the joint, and a second end outboard of the joint, and the wing assembly further comprises:
a first attachment point, located along the wiring harness between the first end and the joint, the first attachment point being arranged to hold the protective sleeve in position, at the attachment point, relative to the fixed wing; and
a second attachment point, located along the wiring harness between the joint and the second end, the second attachment point being arranged to hold the protective sleeve in position, at the attachment point, relative to the wing tip device.

7. A wing assembly according to claim 6, wherein the location of the first and second attachment points is pre-determined, prior to installation of the protective sleeve into the wing assembly.

8. A wing assembly according to any preceding claim, wherein the wiring harness comprises a high voltage conductor, arranged to transmit a high voltage supply.

9. A wing assembly for an aircraft, the wing assembly comprising:
a fixed wing;
a wing tip device moveably mounted at a joint at the end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced; and
a wiring harness extending between the fixed wing and the wing tip device, the wiring harness being encased in a moulded casing, the casing comprising a length that has been pre-moulded into a helical-shape.

10. An aircraft comprising the wing assembly according to any preceding claim.

11. A wiring harness assembly comprising a wiring harness encased in a length of protective sleeve,
wherein the protective sleeve is pre-moulded to follow a path along a helical curve.

12. A method of mitigating wear in a wiring harness assembly extending between a fixed wing and a moveable wing tip device, the wiring harness assembly comprising a wiring harness encased in a protective sleeve, wherein the method comprises the steps of:
moulding a length of the protective sleeve into a helical curve shape; and
installing the wiring harness assembly between the fixed wing and the wing tip device with the helical curve shape pre-moulded into the sleeve and the wiring harness encased in the sleeve.
